# EUROPÄISCHE PATENTSCHRIFT

(11) **EP 2 438 598 B1**
(45) Veröffentlichungstag und Bekanntmachung des Hinweises auf die Patenterteilung: **20.03.2013**
(21) Anmeldenummer: 10721933.9
(22) Anmeldetag: 17.04.2010
(51) Int. Cl.: G21G 1/00, B01D 59/38

(54) **ELEKTROCHEMISCHE ZELLE UND VERFAHREN ZUR ABTRENNUNG VON TRÄGERFREIEM 18F- AUS EINER LÖSUNG AN EINER ELEKTRODE**
ELECTROCHEMICAL CELL AND METHOD FOR SEPARATING CARRIER-FREE 18F- FROM A SOLUTION ON AN ELECTRODE
CELLULE ÉLECTROCHIMIQUE ET PROCÉDÉ DE SÉPARATION DE 18F- SANS PORTEUR D'UNE SOLUTION SUR UNE ÉLECTRODE

(30) Priorität: 30.05.2009 DE 102009023544
(43) Veröffentlichungstag der Anmeldung: 11.04.2012
(73) Patentinhaber: Forschungszentrum Jülich GmbH, 52425 Jülich (DE)
(72) Erfinder: HAMACHER, Kurt, 52076 Aachen (DE)
(86) Internationale Anmeldenummer: PCT/DE2010/000436
(87) Internationale Veröffentlichungsnummer: WO 2010/139293

(56) Entgegenhaltungen:
- WO-A1-2006/061192
- US-A- 5 770 030
- US-A1- 2005 167 267
- US-B1- 6 267 866

## Beschreibung

Die Erfindung betrifft eine elektrochemische Zelle sowie ein Verfahren zur Abtrennung von trägerfreiem ¹⁸F⁻ aus einer Lösung an einer Elektrode.

Zur Abtrennung von trägerfreien Radionukliden aus einer Lösung ist nach dem Stand der Technik ein Verfahren und eine Vorrichtung aus der Schrift DE 195 00 428 A1 bekannt. Sie offenbart eine Vorrichtung sowie ein Verfahren zur Abtrennung von trägerfreien Radionukliden aus Targetflüssigkeiten. Bei der Vorrichtung sind ein Sigradur^{®}- Zylinder sowie eine Platinkapillare an eine Gleichstromquelle angeschlossen. Die Abscheidung von trägerfreiem ¹⁸F⁻ erfolgt an dem Sigradur^{®}- Zylinder, der als Anode fungiert. Die Desorption von ¹⁸F⁻ erfolgt durch Umpolung der Elektroden. Sigradur^{®} bezeichnet dabei Glaskohlenstoff.

Bei den Verfahren nach dem Stand der Technik kommt es zu Verlusten an trägerfreiem ¹⁸F Fluorid gegenüber der in der Lösung befindlichen Menge und damit zur Verminderung der nutzbaren Radioaktivitätsmenge bis zu 40%.

Es ist daher die Aufgabe der Erfindung, ein Verfahren und eine Vorrichtung zu schaffen, mit denen die Verluste an ¹⁸F⁻ stark minimiert werden.

Ausgehend vom Oberbegriff des Anspruchs 1 wird die Aufgabe erfindungsgemäß gelöst mit den im kennzeichnenden Teil des Anspruchs 1 angegebenen Merkmalen.

Mit der erfindungsgemäßen Vorrichtung und dem Verfahren ist es nunmehr möglich, die Desorption des [¹⁸F]Fluorids von der Elektrode auf mehr als 90% zu steigern und somit gegenüber dem Stand der Technik gemäß der DE 195 00 428 A1 zu verbessern. Die Abscheidung von ¹⁸F⁻ findet an einer robusten, chemisch inerten Oberfläche statt. Die Kristallstruktur der Elektrodenoberfläche verhindert die Insertion des wertvollen Radioisotopes und eine schnelle Rückgewinnung in Lösung. Die Abtrennung des ¹⁸F⁻ erfolgt schneller als nach den Methoden gemäß dem Stand der Technik. Eine Einlagerung von wertvollem ¹⁸F⁻ in das Anodenmaterial wird unterbunden, so dass dem ¹⁸F⁻-Gewinnungsprozess kein ¹⁸F⁻ entzogen wird.

Vorteilhafte Weiterbildungen der Erfindung sind in den Unteransprüchen sowie der Beschreibung angegeben.

Im Folgenden soll die Erfindung in ihrer allgemeinen Form beschrieben werden.

### Vorrichtung

Die erfindungsgemäße Vorrichtung umfasst eine elektrochemische Zelle, umfassend zwei Elektroden, deren Oberflächen wenigstens teilweise diamantisiert sind. Die diamantisierte Oberfläche der Elektrode ist chemisch funktionalisiert, indem die äußeren Kohlenstoffatome aminiert oder sulfhydriert sind, so dass die Oberfläche hydrophilere Eigenschaften und damit eine bessere Benetzbarkeit hat. Darüber hinaus können die funktionellen Gruppen zur reversiblen Bindung von Reaktanden genutzt werden.

Die Elektroden können vorzugsweise ausschaltbar oder umpolbar sein, so dass jeweils eine wahlweise als Anode und die andere als Kathode geschaltet werden kann. Die Umpolung oder Abschaltung der Elektroden hat bei Durchführung des erfindungsgemäßen Verfahrens den Vorteil, dass die Ablösung von ¹⁸F⁻ von der Elektrode begünstigt wird, so dass das Verfahren verbessert wird.

In einer bevorzugten Ausführungsform sind die Elektroden an der mit einer sich in der elektrochemischen Zelle befindlichen Lösung in Kontakt stehenden Seite über die gesamte Oberfläche diamantisiert.

Als Elektrodenmaterialen, die diamantisiert sind, kommen grundsätzlich alle elektrisch leitfähigen Materialien in Betracht, insbesondere Metalle, besonders bevorzugt sind jedoch Wolfram, Molybdän oder Titan. Die Diamantisierung kann durch CVD (chemical vapor deposition) erfolgen.

Vorzugsweise ist die auf der Elektrodenoberfläche befindliche Diamantschicht dotiert, um die Schicht elektrisch leitfähig zu machen. Da reiner Diamant elektrisch nicht leitend ist, erfolgt die Fixierung des Fluorids auf einer undotierten Diamantoberfläche lediglich durch elektrostatische Feldwirkung.

In einer bevorzugten Ausführungsform ist die Diamantschicht mit Bor dotiert.

In einer bevorzugten Ausführungsform haben die Elektroden, also die Anode und Kathode, eine planplanare Geometrie.

In einer weiterhin bevorzugten Ausführungsform sind die Oberflächen der Anode und Kathode parallel zueinander angeordnet.

Der Abstand der Elektroden bzw. Elektrodenoberfläche, also der Anode und der Kathode, ist vorzugsweise gering und beträgt beispielsweise 0,1 mm bis 0,5 mm. Dies hat den Vorteil, dass das Volumen der Zelle möglichst klein ist und der optimale Bereich der elektrischen Feldstärke (beispielsweise ≤200 V/cm, z. B. 100 V/cm) auch bei kleinen Spannungswerten von beispielsweise ≤20 V, erreicht werden kann.

Dies hat den Vorteil, dass bei vorgegebener Spannung auch bei minimalen Mengen an ¹⁸F⁻, welches sich in einer Flüssigkeit zwischen den Elektroden befindet, eine vollständige und schnelle Abscheidung vom ¹⁸F⁻ an der Anode erfolgen kann.

Vorzugsweise sind die Elektroden mit Temperiermitteln ausgestattet. Als Temperiermittel kommen beispielsweise Flüssigkeitsströme oder bevorzugt Peltierelemente in Betracht. Mit den Temperiermitteln können Temperaturen je nach experimentellem Erfordernis erreicht werden. Beispielsweise können Temperaturen in einem Bereich zwischen -10°C bis 150 °C eingestellt werden.

Weiterhin ist die eletrochemische Zelle mit Mitteln zum Zu- und Ableiten von Flüssigkeiten ausgestattet. Dabei kann in einer Ausführungsform lediglich eine Zuleitung vorhanden sein, die in einem Batchbetrieb auch als Ableitung dient. In diesem Fall sollten vorzugsweise Mittel zum Druckausgleich vorhanden sein, die eine gute Befüllung ermöglichen. Es können auch getrennte Zu- und Ableitungen vorhanden sein, die einen Durchfluss ermöglichen. Im Falle von getrennten Zu- und Ableitungen befinden sich diese vorzugsweise auf gegenüberliegenden Seiten der elektrochemischen Zelle oder auf der Oberfläche der planaren Elekroden. Weiterhin ist die Zelle an beiden gegenüberliegenden Enden oder an der Oberfläche der Elektroden mithilfe einer ansteckbaren oder alternativ anschraubbaren Flanschverbindung an eine zu- oder ableitende Schlauchverbindung anschließbar. Die Zu- und Ableitung der Zelle ermöglicht sowohl den Betrieb der Zelle durch Befüllung der Zelle mit der entsprechenden Radioaktivitätslösung im Batchbetrieb durch einmalige Befüllung, als auch den Betrieb als Durchflusszelle mit einem stetigen Volumenstrom.

In einer besonders bevorzugten Ausführungsform sind die Elektroden, also die diamantisierte Anode und die diamantisierte Kathode, als planparallele Platten ausgebildet, welche einen Zwischenraum für die Aufnahme einer Flüssigkeit umgrenzen und die in ihrem Randbereich zusammengeführt werden und über gegeneinander abdichtende Randzonen miteinander befestigt werden.

Die Befestigung kann über Verschraubung durch Bohrungen in den Randbereichen oder durch Klemmverbindungen erfolgen.

Die Randbereiche sind vorzugsweise flüssigkeitsdicht miteinander verbunden. Hierzu kann beispielsweise eine Polymerdichtung oder eine plastische Dichtungsmasse eingesetzt werden. Die Randbereiche sind besonders bevorzugt flüssigkeitsdicht und elektrisch nicht leitend miteinander verbunden. Bei dieser Ausführungsform ist es bevorzugt, wenn die Kontaktstellen von Anode und Kathode elektrisch voneinander isoliert sind. Dies kann durch eine reine Diamantschicht, die nicht dotiert ist, erfolgen oder durch andere elektrische Isolatoren, wie Kunststoff. Sollte die Dichtigkeit gegen Flüssigkeitsaustritt durch die Diamantschicht nicht ausreichend sein, kann zur Abdichtung der Zelle zusätzlich eine Polymerfolie oder ein plastisches Dichtungsmaterial eingesetzt werden. Die Folie ist vorzugsweise elektrisch isolierend und hat einen hohen elektrischen Widerstand. Geeignete Materialen für eine Folie sind Polyolefine, beispielsweise Polypropylen.

Die Figur zeigt eine besonders bevorzugte Ausführungsform der erfindungsgemäßen elektrochemischen Zelle in schematischer Form.

Es zeigt:
Fig. 1: Einen Querschnitt durch die erfindungsgemäße elektrochemische Zelle.
Fig. 2: Eine erfindungsgemäße elektrochemische Zelle.

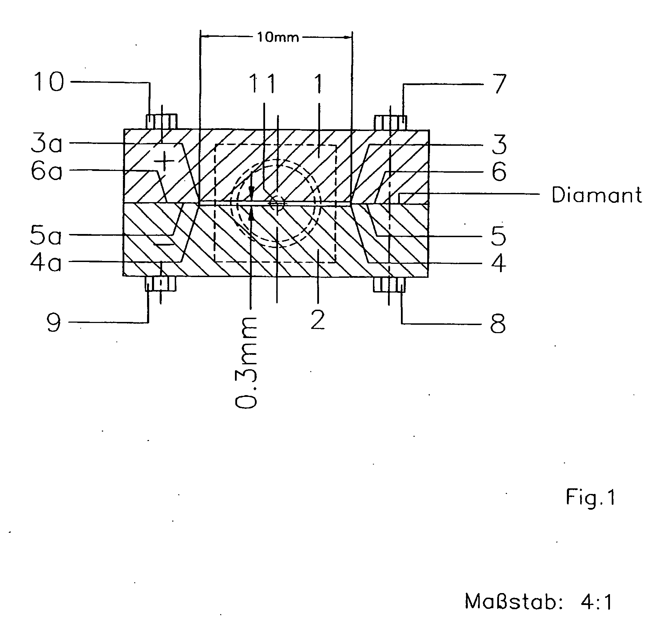

Figur 1 zeigt einen Querschnitt durch die erfindungsgemäße elektrochemische Zelle. In ihr wird durch die Anode 1 und die Kathode 2, ein Innenvolumen begrenzt, welches eine Flüssigkeit aufnehmen kann. Die Anode 1 und die Kathode 2 haben in ihren Randbereichen jeweils eine Stufe 3, 3a, 4, 4a die sie umschließt und in den Außenbereichen parallel zueinander verlaufend geführt werden, so dass sie planparallele Platten 5, 5a 6, 6a bilden, die durch Bohrungen 7,8,9,10 miteinander verschraubt werden können. Die Oberflächen der Anode 1 und der Kathode 2 sind diamantisiert. Auf wenigstens einer planparallelen Platte 5, 5a oder 6, 6a befindet sich eine Diamantschicht. Die Stufen 3, 3a, 4, 4a sind ebenfalls diamantisiert. Im Zentrum der Zeichnung ist der Querschnitt 11 einer Zuleitung dargestellt.

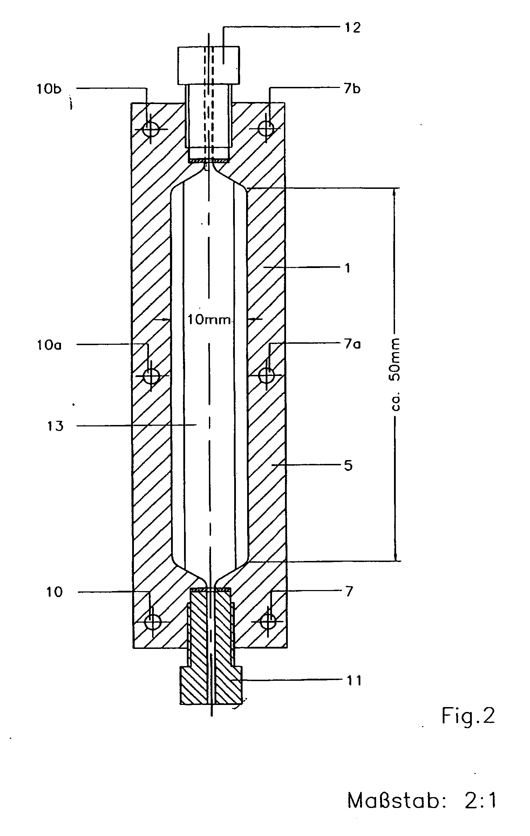

In Figur 2 ist eine Aufsicht auf eine erfindungsgemäße elektrochemische Zelle dargestellt. Gleiche Vorrichtungsmerkmale haben hier dieselben Bezugszeichen wie in Figur 1. Gegenüber der Zuleitung 11 befindet sich eine Ableitung 12. Weitere Bohrungen für Verschraubungen tragen die Bezugszeichen 7a, b und 10a, b. Auf der Anode 1 ist ein Bereich 13 dargestellt, in dem die diamantisierte Oberfläche der Kathoden mit Bor dotiert sein kann.

### Verfahren

Gemäß dem erfindungsgemäßen Verfahren wird eine wässrige Lösung von ¹⁸F⁻ in die erfindungsgemäße elektrochemische Zelle mit einer diamantisierten Anode 1 und einer diamantisierten Kathode 2 geleitet. Die diamantisierte Oberfläche der Elektrode ist chemisch funktionalisiert, indem die äußeren Kohlenstoffatome aminiert oder sulfhydriert sind, so dass die Oberfläche hydrophilere Eigenschaften und damit eine bessere Benetzbarkeit hat. Darüber hinaus können die funktionellen Gruppen zur reversiblen Bindung von Reaktanden genutzt werden. An die Elektroden wird eine Spannung angelegt. Dabei wird das ¹⁸F⁻ an der diamantisierten Anode 1, die dotiert sein kann, fixiert. Bevorzugt wird die Diamantoberfläche mit Bor dotiert.

In einem weiteren Schritt wird die elektrochemische Zelle entleert und getrocknet. Zur Trocknung wird die elektrochemische Zelle mit einem wasserfreien, vorzugsweise organischen Lösungsmittel gespült. Vorzugsweise wird das Lösungsmittel durch die Zelle hindurchgeleitet. Weiterhin bevorzugt wird die Spülung mit Lösungsmittel bei angelegter Spannung durchgeführt.

In einer einfachen Ausführungsform des Verfahrens wird in einem weiteren Schritt ein organisches Lösungsmittel mit einem Transferkatalysator eingerührt, um das ¹⁸F⁻ von der Diamantoberfläche der Anode 1 abzulösen bzw. zu desorbieren.

Das Lösungsmittel ist in einer bevorzugten Ausführungsform aprotisch, besonders bevorzugt dipolar aprotisch.

Beispielsweise können als Lösungsmittel Acetonitril, DMSO und Dimethylformamid eingesetzt werden.

Es können aber auch andere Lösungsmittel z. B. Gemische aus Acetonitril und tert. Alkoholen eingesetzt werden, deren pKₐ-Werte sie als extrem schwache Säuren ausweist. Beispielhaft kann als Alkohol tert. Butanol genannt werden.

Bei dem Transferkatalysator wird in einer bevorzugten Ausführungsform ein Kryptat, z. B. Kryptofix 2.2.2.^{®} (= 4,7,13,16,21,24-Hexaoxa-1,10-diazabicyclo[8.8.8]hexacosan) oder Tetrabutylammoniumsalze, z. B. Tetrabutylammoniumhydrogencarbonat eingesetzt.

Bei diesem Prozess der Desorption werden die Elektroden vorzugsweise umgepolt oder lediglich durch Ausschalten der Spannungsquelle depolarisiert. Dadurch wird insbesondere bei einer Umpolung eine bessere Ablösung des ¹⁸F⁻ von der Elektrode bewirkt.

Die mit ¹⁸F⁻ beladene Transferkatalysatorlösung wird vorzugsweise aus der elektrochemischen Zelle abgeführt und das damit gewonnene ¹⁸F⁻ der weiteren chemischen Umsetzung zugeführt. Dabei wird je nach gewünschtem Produkt ein Agens zugeführt, welches in einer nukleophilen Reaktion zu der Zielverbindung umgesetzt wird. Die Reaktionen sind nach dem Stand der Technik bekannt.

Bei der Abtrennung des ¹⁸F⁻ kommt der Vorteil der erfindungsgemäßen elektrochemischen Zelle und des erfindungsgemäßen Verfahrens zum Tragen. Durch die Diamantisierung der Elektroden wird eine Einlagerung von wertvollem ¹⁸F⁻ in das Elektrodenmaterial weitgehend verhindert oder zumindest stark unterbunden, so dass es zu keinem signifikanten Verlust an ¹⁸F⁻ kommt. Aufgrund der peripheren elektrostatischen Bindung des [¹⁸F]Fluorids an die Diamantoberfläche ist die Kinetik der Ablösung des anionischen Radioisotopes bei Umpolung des Feldes wesentlich schneller und erfolgt mit hoher Effizienz, so dass für die weitere Umsetzung eine prozentual höhere Aktivitätsmenge zur Verfügung steht. Die Ablösung des ¹⁸F⁻ geschieht daher auch schneller und es kommt nicht zu Zeitverlusten, die angesichts der Halbwertszeit des ¹⁸F⁻ zu einer verminderten radiochemischen Ausbeute der Produkte führen.

In einer bevorzugten Ausführungsform wird die Ablösung des ¹⁸F⁻ von der Anode 1, die nun als Kathode geschaltet ist, durch Erhöhung der Temperatur beschleunigt. Bevorzugte Temperaturen liegen im Bereich von 50 °C bis 100 °C.

Die verwendeten Feldstärken betragen in Abhängigkeit des Elektrodenabstandes beispielsweise 1 - 100 V/cm.

In einer besonderen Ausführungsform des erfindungsgemäßen Verfahrens kann das ¹⁸F⁻ an die Anode gebunden werden und bei der Desorption in die Phasentransferkatalysatorhaltige organische Lösung durch die Steuerung der Dauer der Umpolung portionsweise an die Lösung abgegeben werden, so dass aus einem Gewinnungsprozess definierte Radioaktivitätsmengen an ¹⁸F⁻ für verschiedene Weiterverarbeitungen bereit gestellt werden können.

### Beispiel

Elektrochemische Durchflusszelle aus einem planaren, diamantisierten Plattensystem zur online Fixierung von [¹⁸F]Fluorid, dessen radiochemische Umsetzung innerhalb der Zelle oder konsekutive, portionierte Desorption.

Die Erfindung betrifft eine planare Durchflusszelle, mit der trägerarmes [¹⁸F]Fluorid aus wässriger Lösung durch Anlegen eines elektrischen Feldes anodisch abgetrennt und durch Umpolung des Feldes z. B. in eine organische Lösung transferiert werden kann. Die Zelle besteht aus zwei planaren Elektroden, die einseitig so bearbeitet sind, dass beim Aufeinanderlegen der beiden Platten ein flacher Hohlraum, umgeben von einer planaren Randzone, resultiert. An den Enden der Zelle sind zwei mit Gewinde ausgestattete Zu- bzw. Ablauföffnungen. Die Zu- und Ablaufzone der Durchflusszelle sind so gestaltet, dass die ein- bzw. austretende Lösung gleichmäßig durch die Zelle strömt. Die Länge und Breite des Hohlraums sowie die Distanz der Platten sind den praktischen Erfordernissen der elektrochemischen Fixierung und Desorption des Radionuklids angepasst. Die innere Oberfläche der Elektroden ist diamantisiert. Die elektrische Leitfähigkeit kann durch gezielte Dotierung der Diamantoberfläche eingestellt werden. Die Dichtigkeit der Zelle wird dadurch gewährleistet, dass die planaren, diamantisierten Randzonen der Platten durch mehrfache Verschraubung oder eine Klemmverbindung miteinander verbunden sind. Die undotierte Diamantisierung der planaren Randzone gewährleistet die elektrische Isolation zwischen den beiden als Elektroden dienenden Platten. Die Heizung und Kühlung der planaren Durchflusszelle erfolgt z. B. durch beidseitig der Zelle angebrachte Peltier-Elemente.

### Verfahrenstechnische Schritte

### 1. online Fixierung des [¹⁸F]Fluorids aus dem Targetwasser

[¹⁸F]Fluorid-haltiges Targetwasser wird mit konstantem Volumenstrom bei konkreter Feldstärke so durch die Durchflusszelle geleitet, dass das Radioisotop praktisch vollständig an der als Anode fungierenden planaren Elektrode abgeschieden wird.

### 2. Trocknung der Zelle

Die Trocknung der Zelle erfolgt bei anliegendem elektrischen Feld durch Hindurchleiten eines wasserfreien organischen Solvens.

### 3. Quantitative bzw. portionierte Desorption des anodisch abgeschiedenen [¹⁸F]Fluorids.

Die Zelle wird mit einer organischen Lösung, bestehend aus einem dipolar aprotischen Lösungsmittel und einem Transferkatalysator, befüllt und das anodisch fixierte [¹⁸F]Fluorid durch Umpolung des elektrischen Feldes in die organische Lösung überführt. Die an der diamantisierten Elektrodenoberfläche fixierte Radioaktivität kann in der Weise portionsmäßig in die organische Lösung transferiert werden, dass z. B. nach einer definierten Verweilzeit die organische Phase aus der Zelle herausgeleitet wird. Des Weiteren kann die Aktivitätsablösung von der Elektrode durch Erhöhung der Temperatur beeinflusst werden.

Die Ablösung des [¹⁸F]Fluorids von der Elektrodenoberfläche kann durch die Dauer der Umpolung so gesteuert werden, das nur ein Bruchteil der insgesamt anodisch fixierten Aktivität in Lösung geht und somit dem konsekutiven chemischen Reaktionsprozess zur Verfügung gestellt wird. Durch Wiederholung dieses zeitgesteuerten Desorptionsprozesses kann die insgesamt anodisch abgeschiedene Radioaktivitätsmenge portionsweise von der Elektrodenoberfläche in verschiedene Fraktionen Phasentransferkatalysator-haltige organische Lösungen überführt werden. Somit kann die Gesamtaktivität nach anodischer Abscheidung portioniert und unterschiedlichen Folgereaktionen zugeführt werden.

## Patentansprüche

1. Elektrochemische Zelle, umfassend Mittel zum Zu- und Ableiten (11, 12) von Flüssigkeiten sowie zwei Elektroden,
wobei beide Elektroden an ihrer Oberfläche wenigstens teilweise diamantisiert sind, so dass eine Diamantoberfläche ausgebildet wird, **dadurch gekennzeichnet, dass** die Kohlenstoffatome der Oberfläche der Diamantschicht aminiert oder sulfhydriert sind.

2. Elektrochemische Zelle nach Anspruch 1,
**dadurch gekennzeichnet,**
**dass** die Elektroden über die gesamte Oberfläche diamantisiert sind.

3. Elektrochemische Zelle nach Anspruch 1 oder 2,
**dadurch gekennzeichnet,**
**dass** die Diamantoberfläche dotiert ist.

4. Elektrochemische Zelle nach Anspruch 3,
**dadurch gekennzeichnet,**
**dass** die Diamantschicht mit Bor dotiert ist.

5. Elektrochemische Zelle nach einem der Ansprüche 1 bis 4,
**dadurch gekennzeichnet,**
**dass** die Elektroden planparallel zueinander angeordnet sind.

6. Elektrochemische Zelle nach einem der Ansprüche 1 bis 5,
**dadurch gekennzeichnet,**
**dass** die Elektroden umpolbar oder ausschaltbar sind.

7. Verfahren zur Abtrennung von trägerfreiem ¹⁸F⁻ aus einer Lösung in einer elektrochemischen Zelle an einer Elektrode, umfassend folgende Schritte:
a) Einbringen einer ¹⁸F⁻ enthaltenden wässrigen Lösung,
b) Abscheiden des ¹⁸F⁻ an der als Anode (1) geschalteten Elektrode,
c) Entfernen der Lösung aus der elektrochemischen Zelle,
d) Trocknen der elektrochemischen Zelle,
e) Befüllen der elektrochemischen Zelle mit einer Lösung, die einen Transferkatalysator enthält,
f) Entfernen der erhaltenen Lösung, die ¹⁸F⁻ enthält,
**dadurch gekennzeichnet,**
**dass** Elektroden eingesetzt werden, die wenigstens teilweise diamantisiert sind, so dass eine Diamantoberfläche ausgebildet wird und die Kohlenstoffatome der Oberfläche des Diamantschicht aminiert oder sulfhydriert sind.

8. Verfahren nach Anspruch 7,
**dadurch gekennzeichnet,**
**dass** das Trocknen nach Schritt d) mit einem wasserfreien Lösungsmittel erfolgt.

9. Verfahren nach einem der Ansprüche 7 oder 8,
**dadurch gekennzeichnet,**
**dass** der Transferkatalysator nach Schritt e) in einem aprotischen oder dipolar aprotischen Lösungsmittel zugeführt wird.

10. Verfahren nach einem der Ansprüche 7 bis 9,
**dadurch gekennzeichnet,**
**dass** zwischen Schritt e) und f) eine Umpolung der Elektroden oder eine Depolarisation der Elektroden durch Ausschalten der Elektroden erfolgt.

11. Verfahren nach einem der Ansprüche 7 bis 10,
**dadurch gekennzeichnet,**
**dass** in Schritt e) als Transferkatalysator ein Kryptat oder Tetrabutylammoniumsalz eingesetzt wird.

12. Verfahren nach einem der Ansprüche 7 bis 11,
**dadurch gekennzeichnet,**
**dass** die elektrochemische Zelle bei Feldstärken von 1 bis 100 V/cm betrieben wird.

13. Verfahren nach einem der Ansprüche 7 bis 12,
**dadurch gekennzeichnet,**
**dass** es bei einem Elektrodenabstand von 0,1mm bis 0,5 mm durchgeführt wird.

14. Verfahren nach einem der Ansprüche 10 bis 13,
**dadurch gekennzeichnet,**
**dass** die Umpolung oder Ausschaltung der Elektrode nach Anspruch 10 in Zeitintervallen erfolgt, so dass das adsorbierte ¹⁸F⁻ portionsweise in definierten Mengen abgegeben wird.

15. Verfahren nach einem der Ansprüche 7 bis 14,
**dadurch gekennzeichnet,**
**dass** eine elektrochemische Zelle nach einem der Ansprüche 1 bis 6 eingesetzt wird.

## Claims

1. Electrochemical cell, comprising means to provide and remove (11, 12) liquids and two electrodes,
in which both electrodes are at least partly diamondised on their surface,
so that a diamond surface is formed, **characterised in that** the carbon atoms of the surface of the diamond layer are aminated or sulfhydrated.

2. Electrochemical cell according to claim 1,
**characterised in that**
the electrodes are diamondised over their whole surface.

3. Electrochemical cell according to claim 1 or 2,
**characterised in that**
the diamond surface is doped.

4. Electrochemical cell according to claim 3,
**characterised in that**
the diamond layer is doped with boron.

5. Electrochemical cell according to one of claims 1 to 4,
**characterised in that**
the electrodes are arranged plan parallel to each other.

6. Electrochemical cells according to one of claims 1 to 5,
**characterised in that**
the electrodes may have their poles reversed or be disconnected.

7. Method for separating carrier free ¹⁸F from a solution in an electrochemical cell on an electrode, comprising the following steps:
a) Introducing an aqueous solution containing ¹⁸F,
b) Depositing the ¹⁸F on the electrode connected as the anode (1),
c) Removing the solution from the electrochemical cell,
d) Drying the electrochemical cell,
e) Filling the electrochemical cell with a solution, which contains a transfer catalyst,
f) Removing the solution contained, which contains ¹⁸F,
**characterised in that**
electrodes are used, which are at least partly diamondised, so that a diamond surface is formed and the carbon atoms of the surface of the diamond layer are aminated or sulfhydrated.

8. Method according to claim 7,
**characterised in that**
drying according to step d) is done with an anhydrous solvent.

9. Method according to one of claims 7 or 8,
**characterised in that**
the transfer catalyst according to step e) is added to an aprotic or dipolar aprotic solvent.

10. Method according to one of claims 7 to 9,
**characterised in that**
between step e) and f) the electrodes have their poles reversed or are depolarised by disconnecting the electrodes.

11. Method according to one of claims 7 to 10,
**characterised in that**
a cryptate or tetrabutyl ammonium salt is used as transfer catalyst in step e).

12. Method according to one of claims 7 to 11,
**characterised in that**
the electrochemical cell is operated with field strengths of 1 to 100 V/cm.

13. Method according to one of claims 7 to 12,
**characterised in that**,
it is carried out at an electrode distance of 0.1 mm to 0.5 mm

14. Method according to one of claims 10 to 13,
**characterised in that**
the electrodes have their poles reversed or are disconnected according to claim 10 at intervals over time so that the adsorbed ¹⁸F is added in portions in defined quantities.

15. Method according to one of claims 7 to 14,
**characterised in that**
an electrochemical cell according to one of claims I to 6 is used.

## Revendications

1. Cellule électrochimique, comprenant des moyens d'acheminement et d'évacuation (11, 12) de fluides et deux électrodes,
les deux électrodes étant diamantées au moins partiellement sur leur surface, de sorte qu'une surface de diamant soit formée,
**caractérisée en ce que** les atomes de carbone de la surface de la couche de diamant sont aminés ou sulhydrogénés.

2. Cellule électrochimique selon la revendication 1,
**caractérisée en ce que**
les électrodes sont diamantées sur toute la surface.

3. Cellule électrochimique selon la revendication 1 ou 2,
**caractérisée en ce que**
la surface de diamant est dopée.

4. Cellule électrochimique selon la revendication 3,
**caractérisée en ce que**
la couche de diamant est dopée avec du bore.

5. Cellule électrochimique selon l'une des revendications 1 à 4,
**caractérisée en ce que**
les électrodes sont disposées parallèlement au plan l'une par rapport à l'autre.

6. Cellule électrochimique selon l'une des revendications 1 à 5,
**caractérisée en ce que**
les électrodes peuvent changer de pôle ou être commutées.

7. Procédé de séparation de ¹⁸F sans porteur d'une solution dans une cellule électrochimique d'une électrode, comprenant les étapes suivantes :
a) introduction d'une solution aqueuse contenant du ¹⁸F,
b) dépôt du ¹⁸F sur l'électrode commutée en anode (1),
c) retrait de la solution de la cellule électrochimique,
d) séchage de la cellule électrochimique,
e) remplissage de la cellule électrochimique avec une solution qui contient un catalyseur de transfert,
f) retrait de la solution obtenue, contenant le ¹⁸F,
**caractérisé en ce que**
sont utilisées des électrodes qui sont diamantées au moins partiellement, de sorte qu'une surface de diamant soit formée et les atomes de carbone de la surface de la couche de diamant soient aminés ou sulfhydrogénés.

8. Procédé selon la revendication 7,
**caractérisé en ce que**
le séchage s'effectue selon l'étape d) avec un solvant anhydre.

9. Procédé selon l'une des revendications 7 ou 8,
**caractérisé en ce que**
le catalyseur de transfert selon l'étape c) est acheminé dans un solvant aprotique ou aprotique dipolaire.

10. Procédé selon l'une des revendications 7 à 9,
**caractérisé en ce que**
entre l'étape e) et l'étape f), le changement de polarisation des électrodes ou une dépolarisation des électrodes s'effectue par commutations des électrodes.

11. Procédé selon l'une des revendications 7 à 10,
**caractérisé en ce que**
à l'étape e), on utilise comme catalyseur de transfert, un cryptate ou un sel de tétrabutylammonium.

12. Procédé selon l'une des revendications 7 à 11,
**caractérisé en ce que**
la cellule électrochimique est actionnée à des intensités de champ de 1 à 100 V/cm.

13. Procédé selon l'une des revendications 7 à 12,
**caractérisé en ce**
**qu'**il est réalisé à un intervalle d'électrodes de 0,1 mm à 0,5 mm.

14. Procédé selon l'une des revendications 10 à 13,
**caractérisé en ce que**
le changement de polarisation ou la commutation des électrodes selon la revendication 10 s'effectue à intervalles temporels de telle sorte que le ¹⁸F adsorbé soit diffusé par portion en quantités définies.

15. Procédé selon l'une des revendications 7 à 14,
**caractérisé en ce**
**qu'**une cellule électrochimique est utilisée selon l'une des revendications 1 à 6.
